# EUROPÄISCHE PATENTSCHRIFT

(11) **EP 2 433 424 B1**
(45) Veröffentlichungstag und Bekanntmachung des Hinweises auf die Patenterteilung: **19.10.2016**
(21) Anmeldenummer: 10728111.5
(22) Anmeldetag: 19.05.2010
(51) Int. Cl.: H04N 5/232, H04N 5/77, G08B 13/196

(54) **DIGITALE VIDEOKAMERA MIT INTEGRIERTEM BILDSPEICHER**
DIGITAL VIDEO CAMERA
CAMÉRA VIDÉO NUMÉRIQUE

(30) Priorität: 19.05.2009 DE 102009021974
(43) Veröffentlichungstag der Anmeldung: 28.03.2012
(73) Patentinhaber: Mobotix AG, 67722 Winnweiler (DE)
(72) Erfinder: HINKEL, Ralf, 67724 Höringen (DE)
(74) Vertreter: Vossius & Partner Patentanwälte Rechtsanwälte mbB
(86) Internationale Anmeldenummer: PCT/DE2010/000554
(87) Internationale Veröffentlichungsnummer: WO 2010/133210

(56) Entgegenhaltungen:
- EP-A2- 1 202 572
- WO-A1-2009/111377
- WO-A2-2008/136007
- US-A1- 2002 149 682
- US-A1- 2004 174 442
- US-A1- 2007 104 377
- Anonym: "VideoIQ Introduces the VideoIQ iCVR" Press realse from VideoIQ 5. März 2008 (2008-03-05), Seiten 1/3-3/3, XP002602780 Gefunden im Internet: URL:http://www.videoiq.com/news-and-events /press-releases/videoiq_introduces_the_vid eoiq_icvr/index.html [gefunden am 2010-09-30]
- Anomym: "VideoIQ Realeases Latest Version of iCVR Mangement Software" Press release 1. April 2009 (2009-04-01), Seiten 1/2-2/2, XP002602781 Gefunden im Internet: URL:http://www.videoiq.com/news-and-events /press-releases/videoiq_releases_latest_ve rsion_of_icvr_management_software/index.ht ml [gefunden am 2010-09-30]

## Beschreibung

Die vorliegende Erfindung betrifft das oberbegrifflich Beanspruchte und bezieht sich somit auf digitale Videokameras.

Digitale Videokameras finden zu Überwachungszwecken in zunehmendem Maße Verwendung. Vorteilhaft ist dabei die immer besser werdende Qualität der von der Kamera bereitgestellten Bilder. Die hohe Bildqualität äußert sich in einer hohen räumlichen Auflösung (Pixeldichte), einer hohen Bildwiederholfrequenz sowie gegebenenfalls einem großen dynamischen Umfang, das heißt einem großen Bereich zwischen dunklen und hellen Regionen.

Bei den erwünschten Bildern sehr hoher Qualität treten jedoch Probleme durch die Notwendigkeit auf, die mit einer Videokamera erzeugten Bilder auch für den Benutzer bereitzustellen. Dies ist insbesondere dann kritisch, wenn zwischen einem die Bilder betrachtenden und/oder auswertenden Benutzer und der Kamera eine nur schmalbandige Verbindung besteht. So werden die Probleme besonders gravierend, wenn eine Überwachung über mobile Kommunikationswege wie UMTS erfolgen soll; auch bei anderen Anwendungen wie beispielsweise in Überwachungszentralen, in welchen aus einer Vielzahl von Kameras Datenströme zusammenlaufen, ist eine Überwachung kritisch.

Digitale Videokameras nach dem Stand der Technik sehen zum Teil bereits vor, innerhalb der Kamera Bilder eines Bildsensors zu speichern, was einerseits gewährleistet, dass auch bei Störung der Übertragungsleitung eine Aufzeichnung möglich ist, und andererseits erlaubt, auf die Bilder später noch einmal zuzugreifen. Die Bildaufzeichnung erfolgt dabei im Stand der Technik mit der gleichen Auflösung und Bildwiederholfrequenz wie die eines Bildstromes, der zur Liveübertragung aus der Kamera für einen Benutzer bereitgestellt wird. Die zu hohe Auflösung kann zu Problemen bei der Übertragung führen, da sie eventuell eine zu hohe Bandbreite fordert; wenn die Qualität der live an einen Betrachter übertragenen Bilder hingegen verringert wird, wird zugleich auch die Qualität der Aufzeichnung verringert, was eine spätere Suche nach Details in Bildern massiv erschwert.

Die spätere Suche nach Details in Bildern, die auf der Kamera gespeichert wurden, ist zudem weiter dadurch begrenzt, das oftmals die Kamera trotz der Suche in gespeicherten Bildern weiter live zur Überwachung benutzt werden soll und überdies die Bandbreite, die zur Übertragung zur Verfügung steht, beschränkt ist.

Es gibt bereits Vorschläge, die Daten, die aus einer digitalen Videokamera bereitgestellt werden, zu reduzieren, indem etwa nur jene Bildbereiche übertragen werden, in denen erhebliche Änderungen stattgefunden haben. Es wird hierzu insbesondere auf die Anmeldung PCT/EP 03/14795 der vorliegenden Anmelderin verwiesen.

Verwiesen wird auch auf die US 2002/149682 A2,die US 2004/174442 A1, die US 2007/104377 A1, die WO 2008/136007 A2 sowie die als nächstliegenden Stand der Technik angesehene EP 1 202 572 A2.

Es ist wünschenswert, ohne Beeinträchtigung der Aufzeichnungs- oder Übertragungsqualität eine verbesserte Recherche von im Speicher der Kamera gespeicherten Bildern zu ermöglichen.

Die Aufgabe der vorliegenden Erfindung besteht darin, Neues für die gewerbliche Anwendung bereitzustellen.

Die Lösung dieser Aufgabe wird in unabhängiger Form beansprucht.

Nach einem ersten Aspekt der vorliegenden Erfindung wird somit eine digitale Videokamera mit einem einen Bilddatenrohstrom erzeugenden Bildsensor und einem Speicher zur Speicherung von im Ansprechen auf den Bilddatenrohstrom erzeugter Bilddaten und einer Datenausgabeeinheit, bei welcher die Datenausgabeeinheit zur Ausgabe von im Ansprechen auf den Bilddatenrohstrom erzeugten Bilddaten an den Speicher und zur simultanen Ausgabe von Bilddaten, und Bilddaten aus den gespeicherten Daten aus der Kamera an Benutzer ausgebildet ist, vorgeschlagen, bei welcher eine Steuerung vorgesehen ist, um im Ansprechen auf sowohl Bildparameter für die Bilddatenstromspeicherung in der Kamera als auch die Bilddatenstromausgabe heraus aus der Kamera einen maximal erforderlichen Bildausschnitt zu bestimmen, der aus dem Sensor oder als Bilddatenrohstrom weiterverarbeitet wird.

Damit schlägt die Erfindung zunächst vor, den Bilddatenrohstrom einfach an unterschiedliche Bildgeneratoren zu speisen, nämlich zum einen an einen Bildgenerator, der aus dem Bilddatenrohstrom die zu speichernden Bilder generiert und andererseits, um davon unabhängig einen (Live-)Bildstrom vorzusehen. Dies erlaubt es, die Bilddatenmenge, die jeweils handzuhaben ist, gezielt anzupassen, ohne die prinzipiell möglichen Vorteile moderner Videokameras aufzugeben. So kann die Bildwiederholfrequenz für Speicherungszwecke gering gewählt werden, was typisch ausreichend ist, weil in typischen Überwachungsszenarien wie an Tanksstellen-Zapfanlagen schnelle Bewegungen eine untergeordnete Rolle spielen; gleichzeitig kann aber die Bildauflösung sehr hoch gewählt werden. Andererseits kann für die Livebeobachtung dafür gesorgt werden, dass eine weitgehend ruckelfreie Bildübertragung erfolgt, was Ermüdungserscheinungen beim Beobachten vermeidet.

Es wird aber nicht nur die Abhängigkeit der aufgezeichneten Bildqualität von jener des Livestroms behoben. Die Erfindung hat nämlich auch erkannt, dass in einer solchen Situation ohne zusätzliche signifikante Erhöhung, typisch sogar ganz ohne Erhöhung der Kameraleistungsaufnahme, ein dritter Datenstrom bereitgestellt werden kann, der eine effiziente Nutzung der Kamera über mobile Geräte oder an Benutzer-Endgeräten, die nur über schmalbandige Datenleitungen mit der Kamera verbunden sind, ermöglicht. Dazu werden Daten aus den gespeicherten und damit einer gegenüber dem Bilddatenrohstrom bereits reduzierten Datenmenge erzeugt, was eine der bereits reduzierten Datenmenge entsprechend geringere Leistungsaufnahme bewirkt. Es sei hier zugleich erwähnt, dass hier zwar ein Bildgenerator für die Ausgabe von Daten mit einer reduzierter Datenmenge aus den gespeicherten Daten vorgesehen sein kann, der typisch nur eine geringe Übertragungsbandbreite benötigt, nämlich dann, wenn damit ein Recherchebildstrom mit verringerter Auflösung, Dynamik, Farbtiefe, Bildwiederholfrequenz und/oder mit kleineren Ausschnitten etc. bereitgestellt wird, dass aber gleichwohl mit diesem Datengenerator in bevorzugter Ausführung auch Bilder oder Bildsequenzen mit hoher Auflösung, Farbtiefe usw. bereitgestellt werden können, insbesondere, nachdem anhand einer zuvor erfolgten Recherche als relevant erkannte Bilder oder Bildsequenzen ausgewählt wurden. Bei einer solchen Ausgabe nach zuvor erfolgter Recherche, welche Bilder oder Bildsequenzen oder Videosequenzen ausgegeben werden sollen, wird typisch keine Datenmengen- beziehungsweise -ratenverringerung gegenüber dem (Live-)Bildstrom erfolgen, wobei der Livebilddatenstrom typisch unverändert ausgegeben wird, während nun die (Voll-)Daten zu als relevant erkannten Bildern ausgegeben werden; hier werden typisch die Livebilder mit unveränderter Datenrate ausgegeben, während die gemäß vorheriger Recherche aus dem Archiv auszugebenden Daten als gegebenenfalls nunmehr große Datenmenge mit eventuell verringerter Datenrate ausgegeben werden; ein Zuwarten auf die Übertragung solcher Archivbilder ist im allgemeinen akzeptabel. Alternativ und/oder zusätzlich könnte die Livebildstromübertragung kurzfristig unterbrochen werden und/oder, bei extremer Gesamt-Datenkanalbandbreitenbegrenzung, durch Änderung der Datenkompression, der Bildwiederholfrequenz oder ähnliches selbst kurzfristig reduziert werden, um so die Übertragung der ermittelten Archivbilder in adäquater Zeit zu ermöglichen. Eine weitere Möglichkeit der Datenmengenreduktion besteht in der Wahl einer anderen Kompressionsrate und/oder eines anderen Algorithmus.

Wie aus dem Vorstehenden ersichtlich, ist es vorteilhaft, wenn bei einer erfindungsgemäßen Videokamera der bildgebende Sensor einen Bilddatenrohstrom mit Bildern hoher Auflösung, insbesondere hoher Pixelzahl und/oder hoher Dynamik erzeugt, weil damit keine wesentliche Erhöhung der zur Live-Nutzung der Kamera erforderlichen Bandbreite verbunden ist, aber die oftmals gewünschte oder erforderliche Detailgenauigkeit in gespeicherten Bildern erreichbar ist.

Es ist zudem ebenfalls und/oder zusätzlich vorteilhaft, wenn dabei zugleich die Datenausgabeeinheit dazu ausgebildet ist, Bilder mit geringerer Auflösung als jene des Bilddatenrohstroms zu erzeugen; diese Bilder können als Livebildstrom ausgegeben werden. Der Livebildstrom wird also typisch mit einer durch Verringerung der räumlichen Auflösung geringeren Datenrate bereitgestellt. Es sei im übrigen darauf hingewiesen, dass Techniken zur Verringerung der Datenrate in Videobildströmen per se bekannt sind; so wurden von der Anmelderin bereits Bildübertragungsverfahren vorgeschlagen, bei denen eine Aktualisierung bestimmter Bildbereiche abhängig von darin im Vergleich zu vorhergehenden Bildern erfassten Änderungen priorisiert wird; es wurden auch von der Anmelderin bereits Bildübertragungsverfahren vorgeschlagen, bei denen einzelne definierte oder definierbare Ausschnitte mit höherer Auflösung übertragbar sind. Verwiesen sei unter anderem auf die Dokumente DE 102 61 501 A1, EP 1 614 080 und DE 10 2008 049 872. Diese Dokumente sind durch Bezugnahme vollumfänglich zu Offenbarungszwecken eingegliedert. Im übrigen sei darauf hingewiesen, dass an Stellen, wo in der vorliegenden Anmeldung von (Live-)Bildströmen die Rede ist, auch auf Videoinformation Bezug genommen werden könnte, insbesondere auf Videoinformation mit zusätzlichem Ton; es ist dort, wo eine Kamera nicht nur stumme Bildsequenzen, sondern auch eine Tonaufnahme liefert, im übrigen möglich, den Ton mit abzuspeichern. Bei der Tonspeicherung fallen zudem keine besonders großen Datenmengen an. So ist es selbst dort, wo nur mit geringen Frameraten für die Speicherung gearbeitet wird, wie beispielsweise 4 Bildern pro Sekunde zur Einspeicherung hoch aufgelöster Bilder, möglich, eine kontinuierliche Tonspur aufzuzeichnen. Es sei in diesem Zusammenhang erwähnt, dass die Tonspur gegebenenfalls für Recherchezwecke übertragen werden kann, etwa, um laute Geräusche wie Schüsse zu erkennen. Auch kann zu Recherchezwecken die Tonspur aus einem Zeitraum, in den ein einzelnes übertragenes Bild gehört, vollständig übertragen werden.

Es sei weiter darauf hingewiesen, dass bei der Bilddatenbearbeitung regelmäßig ein Teil der Pixelinformation temporär zwischengespeichert werden muss, etwa um bestimmte, mit der Erfindung ohne weiteres verwendbare Kompressionsalgorithmen anwenden zu können. Diese temporäre Zwischenspeicherung wird jedoch nicht als Speicherung im Sinne der Erfindung betrachtet; die Speicherung im Sinne der Erfindung kann nämlich auch als Archivierung oder archivierende Speicherung oder speichernde Archivierung bezeichnet werden, bei der eine sehr große Zahl an Bildern, wie sie im Laufe von Stunden oder Tagen erfasst werden, zu speichern ist.

Es ist weiter vorteilhaft, wenn alternativ und/oder zusätzlich bei einer erfindungsgemäßen digitalen Videokamera der bildgebende Sensor einen Bilddatenrohstrom mit schneller Bildfolge erzeugt. Schnell bedeutet hier insbesondere ausreichend schnell, um zu erwartende Bewegungen mit einer Bildfolge aufnehmen zu können, die eine Mehrzahl von Bildern umfasst und/oder die eine ruckelfreie Darstellung ermöglicht; der Livebildstrom kann daher zum Beispiel 25 Frames pro Sekunde als Bildrate besitzen. Eine Auflösung muss dabei typisch aber nicht besser als zum Beispiel VGA-Standard sein.

Es ist zudem ebenfalls und/oder zusätzlich vorteilhaft, wenn dabei zugleich auch die Datenausgabeeinheit dazu ausgebildet ist, Bilder mit einer Bildwiederholfrequenz, die kleiner ist als jene des Bilddatenrohstroms, als Bilddatenstrom mit reduzierter Datenrate zu erzeugen. So kann es für die Archivierung ausreichen, mit einer Bildrate von 4 Frames pro Sekunde aufzuzeichnen. Dies reicht in der Regel aus, um auch bei sich über das Bild bewegenden Personen Details wie Gesichter gut erfassen zu können. Die räumliche Auflösung, das heißt die Pixelmenge, wird dabei bevorzugt größtmöglich gewählt. Dass allerdings auch für die Aufzeichnung schon per se uninteressante Bereiche definierbar sind, wie zum Beispiel ein für Personen nicht zugänglicher Hintergrundbereich, und dass für solche per se uninteressanten Bereiche auch keine Archivierung oder Aufzeichnung mit hoher oder gar höchstmöglicher Auflösung erforderlich ist, sei erwähnt.

Die so erzeugten Bilder können dann archiviert werden, das heißt in den kamerainternen Datenspeicher eingeschrieben werden. In einem solchen Fall wird die Datenausgabeeinheit die Bilder unter Zugrundelegung des Bilddatenrohstromes erzeugen. Es ist aber auch möglich, die Datenausgabeeinheit dazu auszubilden, Bilder mit einer Bildwiederholfrequenz, die kleiner ist als jene des Bilddatenrohstroms, als Bilddatenstrom mit reduzierter Datenrate auf Grundlage der archivierten Bilder aus dem Speicher zu erzeugen. In einem solchen Fall kann eine weitere Reduzierung gegenüber der gespeicherten Datenmenge etwa durch Verringerung der räumlichen Auflösung, das heißt der Pixelzahl, erfolgen, zum Beispiel für jene Bereiche eines Bildes, in denen typisch keine interessanten Details zu erwarten sind. Auch lässt sich gegebenenfalls ein Bild beschneiden, was den erforderlichen Speicherplatz weiter verringert. Dass typisch die Archivierung eines Bildausschnittes lediglich unter Bestimmung eines Schwenk- und Neigewertes erfolgen muss, eine Zoomangabe also nicht zwingend erforderlich ist, sei erwähnt.

Es ist weiter vorteilhaft, wenn alternativ und/oder zusätzlich die Kamera einen Eingang zur Vorgabe eines datenreduziert übertragbaren Bilddetails aufweist, bevorzugt zur Vorgabe eines Bildausschnitts und/oder einer Bildausschnittvergrößerung. Damit kann ausgewählt werden, welcher Bereich des Bildes zu Recherchezwecken über ein langsames Netzwerk, das heißt ein Netzwerk mit schmalbandiger Übertragung, übertragen werden soll. So kann etwa ein Bildbereich gewählt werden, in welchem sich ein Gegenstand befand, der während einer Aufzeichnungsphase beschädigt oder gestohlen wurde; die Beschränkung auf diesen Bereich kann zum Beispiel durch Vorgabe von PTZ-(Pan, Tilt, Zoom-)Parametern geschehen, mit denen Bilddetails bestimmt werden. So kann vermieden werden, dass weitgehend uninteressante Bildbereiche übertragen werden müssen.

Neben der Vorgabe von PTZ-Parametern sind aber auch andere Möglichkeiten gegeben, die Datenrate zu verringern. So können durch automatische Bildanalyse bestimmte Details, insbesondere Gesichter automatisch erkannt werden; eine besonders bevorzugte Variante kann bei Tankstellen-, Parkhaus-, Straßenüberwachung usw. mittels OCR im Bild bestimmte Merkmale, insbesondere Autokennzeichen, erfassen. Mit dem reduzierten Datenstrom müssen dann nur die jeweiligen Kennzeichen übertragen werden, was erforderlichenfalls nicht einmal als Bilddaten geschehen muss. Wenn, was bevorzugt ist, Bilddetails automatisch generiert werden, können solche zur Archivindexierung verwendet und gegebenenfalls für Anfragen an die Videokamera übermittelt werden. So kann etwa zu den Bildern im Datenspeicher einer eine Tankstellenzapfanlage beobachtenden Kamera jeweils erfasst werden, welche Autokennzeichen gerade im Bild zu sehen sind; dies ist automatisch möglich. Es können dann Bilder abgerufen werden, auf denen Autos mit einem vorgegebenen Kennzeichen (oder Kennzeichenteilen, wie bestimmten Landkreisen) erfasst sind. Dass zuvor Listen mit den erfassten Kennzeichen einem Beobachter übermittelbar sind, sei erwähnt. Auch kann vorgesehen sein, dass Verknüpfungen mit bestimmten Zeiten vorgenommen werden können. Das Archiv ist in einer bevorzugten Variante demgemäß indexiert.

Es sei im übrigen erwähnt, dass in einer Videokamera der vorliegenden Erfindung in bevorzugter Ausgestaltung die handzuhabende Datenmenge dadurch verringert wird, dass jene vom Bildsensor erfassten Bereiche, die weder für die Liveübertragung von Bildern noch für die Bildarchivierung erforderlich sind, nicht bearbeitet werden; dies kann so weit gehen, dass bestimmte Sensorbereiche gar nicht erst ausgelesen werden.

Um zu ermöglichen, dass nur eine möglichst geringe Datenmenge handzuhaben ist, wird daher in bevorzugter Ausgestaltung der Erfindung eine Blockbestimmungsstufe vorgesehen, an welche sowohl die den Bildausschnitt des Livebildgenerators bestimmenden Parameter als auch jene Parameter, die den Ausschnitt der zu archivierenden Bilder bestimmen, gespeist werden. Im Ansprechen auf diese beiden Parametersätze wird dann der maximal erforderliche Block bestimmt, der aus dem Sensor ausgelesen wird. Es sind daher nur die in diesem Block liegenden Daten zu erfassen und/oder zu bearbeiten. Damit wird der zu verarbeitende Bildsensorausschnitt von mehr als einem Parametersatz gleichzeitig bestimmt.

Es ist weiter vorteilhaft, wenn alternativ und/oder zusätzlich die digitale Videokamera so vorgesehen ist, dass die Datenausgabeeinheit dazu ausgebildet ist, gespeicherte Bilder anhand des reduzierten Datenstroms identifizierbar zu machen, wobei die Videokamera einen Eingang aufweist, um Signale zu empfangen, mit denen von einem Benutzer gewünschte Bilder aus dem Speicher identifiziert werden können. Im Ansprechen auf die empfangenen, Bilder im Speicher identifizierenden Signale können dann etwa Bilder mit erhöhter Auflösung und/oder weniger stark beschnittene Bilder und/oder Bilder mit schnellerer Bildfolge insbesondere als Bildstrom bereitgestellt werden. Die Übertragung dieser Bilder über einen schmalbandigen Datenkanal oder einen stark belasteten Datenkanal ist dann zwar ebenfalls langsam, was aber angesichts der vor Übertragung der eigentlich bedeutenden, hochaufgelösten Bilder erfolgten Archiv-Recherche ohne weiteres akzeptabel ist.

Es ist auch, alternativ und/oder zusätzlich, bevorzugt, wenn bei einer digitalen Videokamera wie vorstehend beschrieben die Datenausgabeeinheit dazu ausgebildet ist, einen Bilddatenstrom im Speicher abzulegen und simultan an Benutzer einen Bilddatenstrom mit reduzierter Datenmenge und wenigstens einen für einen Benutzer ausgegebenen Bilddatenstrom mit einer anderen räumlichen und/oder zeitlichen und/oder dynamischen Auflösung als jener der im Speicher abgelegten Bilddaten auszugeben. Es wird also beim dritten Datenstrom für jenen Benutzer, dessen Bandbreite beschränkt ist, der reduzierte Datenstrom explizit als Bilddatenstrom definiert, und zwar als unter Zugrundelegung des gespeicherten Bilddatenstroms genierter Bilddatenstrom. Dieser erlaubt es, eine für die Speicherung bereits erfolgte Datenraten- beziehungsweise - mengenverringerung auszunutzen.

Es sei hier noch einmal darauf hingewiesen, dass Bilder zu Recherchezwecken einzeln oder als Sequenz sowie mit oder ohne Ton ausgegeben werden können, das heißt, dass der Recherchebildgenerator auch in der Lage ist, Videodatenströme aus dem Speicherinhalt zu generieren. Überdies sei angemerkt, dass der Recherchebildgenerator dann, wenn ein bestimmtes Einzelbild oder eine bestimmte Bildsequenz als relevant erkannt wurde, dieses Einzelbild oder diese bestimmte Bildsequenz in der gewünschten Auflösung zu übertragen vermag.

Es sei im übrigen darauf hingewiesen, dass der Benutzer, der einen Livebilddatenstrom empfängt, mit jenem Benutzer, der den weiter reduzierten Archivdatenstrom empfängt, identisch sein kann. Dies gilt allgemein für die Anwendung der Erfindung in all ihren Aspekten, soweit nicht anders vermerkt. Gleichwohl ist dies aber nicht zwingend; so kann etwa eine Livebild-Übertragung an eine Wachzentrale erfolgen. Sobald dem dort tätigen Wachpersonal nicht klar ist, ob eine Gefahrenlage besteht, kann ein Vorgesetzter, der etwa über ein UMTS-Mobiltelephon erreichbar ist, alarmiert werden, damit dieser sich aus dem Speicher bestimmte Bildinformationen beschafft. Auch wäre möglich, dass das Wachpersonal bereits - zum Beispiel durch Vorgabe der PTZ-Parameter - bestimmt, welche Bildausschnitte und/oder Zeitbereiche an einen Vorgesetzten oder dergleichen übertragen werden sollen; erforderlichenfalls kann auch die Übertragung auf einem anderen Kanal wie einer Mobilfunkstrecke ausgelöst werden.

Es ist im übrigen bevorzugt, dass alternativ und/oder zusätzlich die Datenausgabeeinheit dazu ausgebildet ist, als wenigstens einen Bilddatenstrom einen Livebilddatenstrom hoher Auflösung und hoher Bildwiederholfrequenz auszugeben, bevorzugt mit höherer Bildwiederholfrequenz als im gespeicherten Datensatz, aber mit bevorzugt geringerer Auflösung.

Es wird somit unter anderem eine digitale Überwachungskamera vorgeschlagen, bei welcher drei Bildgeneratoren vorgesehen sind, nämlich ein Bildgenerator zur Generierung eines Livebildstromes, ein Bildgenerator zur Archivierung des Bildstromes und ein Generator zur Ausgabe eines Recherchebildstromes, wobei alle Bild- beziehungsweise Videoströme nach Benutzervorgaben konfigurierbar sind, insbesondere dergestalt, dass der zu archivierende Bildstrom vorab, zum Beispiel bei Inbetriebnahme der Kamera, festgelegt wird, während die beiden anderen Bildströme im laufenden Betrieb, zum Beispiel von einem Benutzer online, konfiguriert werden können.

Die Erfindung wird im Folgenden nur beispielhaft unter Bezugnahme auf die Zeichnung beschrieben. In dieser ist dargestellt durch:

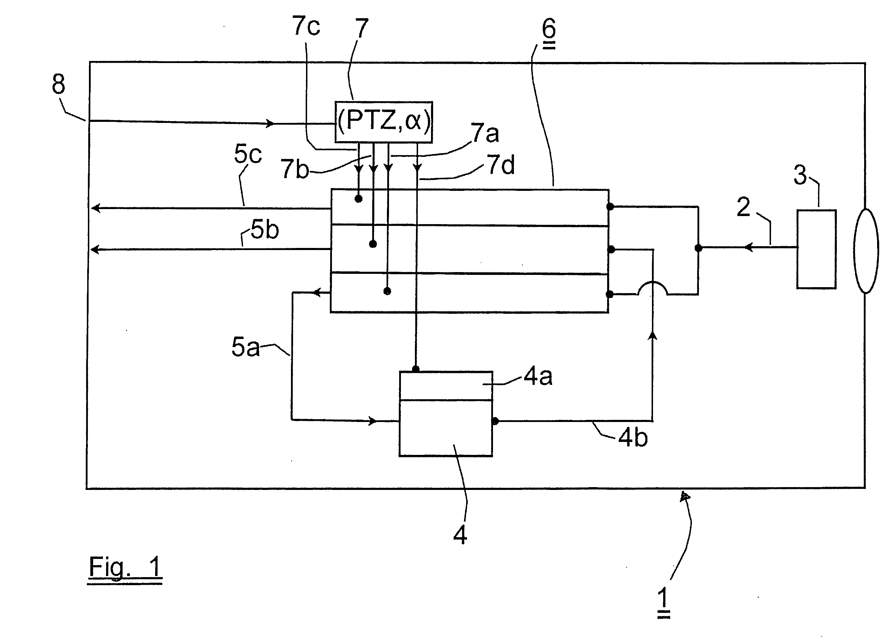

- Fig. 1: eine Anordnung gemäß der vorliegenden Erfindung.

Nach Fig. 1 umfasst eine allgemein mit 1 bezeichnete digitale Videokamera 1 mit einem einen Bilddatenrohstrom 2 erzeugenden Bildsensor 3 und einem Speicher 4 zur Speicherung von im Ansprechen auf den Bilddatenrohstrom 2 erzeugter Bilddaten 5 weiter eine Datenausgabeeinheit 6, bei welcher die Datenausgabeeinheit zur Ausgabe von im Ansprechen auf den Bilddatenrohstrom erzeugten Bilddaten 5a an den Speicher 4 und zur simultanen Ausgabe von Bilddaten 5b und von Daten 5c mit einer typisch reduzierten Datenmenge aus den gespeicherten Daten an Benutzer ausgebildet ist.

Die digitale Videokamera 1 ist im vorliegenden Ausführungsbeispiel eine Überwachungskamera, die zur Dauerüberwachung eines Objektes, hier - zu Erläuterungszwecken angenommen - einer Tankstellenzapfanlage (nicht gezeigt), fest installiert ist. Die Bilder der digitalen Videokamera 1 sind dazu vorgesehen, einerseits eine Liveüberwachung, hier der Zapfanlage von der Kasse aus, zu erlauben und andererseits die Bilder für einen späteren Abruf befristet zu archivieren.

Als Bilddatenrohstrom 2 wird in der Videokamera 1 mit dem Bildsensor 3 der Bilddatenrohstrom aus räumlich hochaufgelösten Bildern, also Bildern mit einer sehr großen Pixelzahl und großer Bildwiederholfrequenz erzeugt. Als sehr große Pixelzahl werden am Anmeldetag Bilder mit QXGA-Auflösung angesehen; die Bildwiederholfrequenz ist so groß gewählt, dass Bilder ruckelfrei betrachtet werden können, im vorliegenden Beispiel also zum Beispiel 25 Frames pro Sekunde (fps). Die Angaben zur räumlichen Auflösung und zur Bildwiederholfrequenz sind aber nicht beschränkend und es wird einzusehen sein, dass mit dem Fortschreiten der Technik bessere Auflösungen, höhere Bildwiederholfrequenzen und gegebenenfalls eine größere Dynamik ohne große Kosten erzielbar sind. Erwähnt sei im übrigen, dass im vorliegenden Fall die Dynamik der Bilder, das heißt die maximal gut erkennbaren Hell-Dunkelkontraste und die damit einhergehenden Möglichkeiten, durch Beschränkung der übertragenen Hell-Dunkel-Kontraste oder durch Hochdynamikbereich-Kompressionsverfahren die Datenrate beziehungsweise -menge zu reduzieren, nicht weiter diskutiert werden, dass aber gleichwohl solche Möglichkeiten existieren und per se bekannt sind.

Der Bildsensor 3 gibt den Bilddatenrohstrom 2 an die Datenausgabeeinheit 6 aus, die drei unabhängige Bildgeneratoren 6a, 6b und 6c enthält. Dabei wird der Bilddatenrohstrom 2 nur an die Bildgeneratoren 6a, und 6c gespeist.

Der Bildgenerator 6a ist dazu ausgebildet, aus dem Bilddatenrohstrom 2 einen Datenstrom 5a zu generieren, der in den als kamerainternes Bildarchiv dienenden Speicher 4 gespeist wird. Weiter ist der Bildgenerator 6a dazu ausgebildet, den in den Speicher 4 einzuspeisenden Datenstrom so zu indexieren, dass einzelne, zu bestimmten Indizes gehörende Bilder anhand des Index wieder aufgefunden werden können. Die entsprechenden Indizes sind zur Ablage in einem Speicherbereich 4a des Speichers 4 vorgesehen und können beispielsweise auf die Adressen verweisen, an denen die Daten eines jeweiligen Bildes beginnen.

Als vom Bildgenerator 6a vorgesehene Indizes seien beispielsweise die Aufnahmezeit oder ein automatisch erkanntes Bildmerkmal genannt. Es sei erwähnt, dass die Aufzeichnung nicht durchlaufen muss, sondern beispielsweise aüslösbar ist durch eine Bildanalyse, mit der erkannt wird, dass ein Objekt wie ein an der Zapfanlage vorfahrendes Auto ins Bild gekommen ist. Es sei überdies erwähnt, dass der Bildspeicher 4 bevorzugt zyklisch überschreibbar ist, dass aber das zyklische Überschreiben erforderlichenfalls in der hier dargestellten Ausführungsform unterbunden werden kann, was aber nicht zwingend ist. Auf die Möglichkeit, durch automatische Bildanalyse Indizes wie Autokennzeichen zu bestimmen, sei hingewiesen.

Der Bildgenerator 6a ist dazu ausgelegt, als Datenstrom 5a einen Datenstrom zu erzeugen, der gegenüber dem Bilddatenrohstrom 2 eine geringere Bildwiederholfrequenz besitzt, jedoch die gleiche räumliche Auflösung, das heißt Pixelanzahl besitzt.

Der Bildgenerator 6c, an welchen der Bilddatenrohstrom 2 ebenfalls gespeist wird, ist dazu ausgelegt, einen Bilddatenstrom 5c mit gleich hoher Bildwiederholfrequenz wie jene des Bilddatenrohstroms 2 zu erzeugen, wobei die im Bilddatenstrom 5c enthaltenen Bilder aber (typisch, nämlich insbesondere während der Recherche nach bestimmten wichtigen Einzelbildern oder bestimmten Bildsequenzen) eine geringere räumliche Auflösung als die Bilder des Bilddatenrohstroms 2 besitzen. Der Speicher 4 ist vorliegend als zyklisch überschreibbares Dual-Port-Memory gebildet, in welches geschrieben werden kann, während gleichzeitig Daten ausgelesen werden. Die Daten aus dem Speicher gelangen über eine Datenleitung 4b an den Bilddateneingang des Bildgenerators 6b der Datenausgabeeinheit 6. Der Bildgenerator 6b ist dazu ausgelegt, Bilder mit gegenüber der hohen räumlichen Auflösung der gespeicherten Bilder verringerter Auflösung an seinem Ausgang 5b auszugeben.

Der Datenausgang 5c ist (nicht dargestellt) über einen Datenkanal zu einem Benutzer geführt, der die Livebilder auswertet. Der Datenausgang 5b ist über einen (anderen, hier insbesondere schmalbandigeren, das heißt langsameren) Datenkanal an einen (hier: anderen) Benutzer geführt, der nach bestimmten Bildern im Speicher 4 sucht.

Der Datenausgabeeinheit 6 ist nun eine Steuerung 7 zugeordnet, mit welcher für jeden der drei Bildgeneratoren 6a, 6b, 6c unabhängig voneinander festgelegt werden kann, welche Bereiche eines Bildes im jeweiligen, vom Bildgenerator 6a, 6b, 6c erzeugten Bildstrom 5a, 5b beziehungsweise 5c dargestellt werden sollen beziehungsweise welche Bildwiederholfrequenzen gewünscht sind; dass andere Parameter wie Kompression etc. bevorzugt gleichfalls wählbar sind, sei hier betont.

Dazu ist die Steuerung 7 mit einem Eingang 8 verbunden, an welchem die entsprechenden Angaben eingebbar sind. Der Eingang 8 wie auch die Ausgänge 5b und 5c können als Standardschnittstelle definiert sein und eine Kommunikation mit der Kamera über Protokolle wie TCP/IP, WLAN, UMTS usw. ermöglichen.

Die Steuerung 7 ist so ausgelegt, dass für den Livebildgenerator 6c ein Bildausschnitt über einen ersten Satz Pan-Tilt- und Zoomparameter vorgebbar ist, die an den Bildgenerator 6c über eine Leitung 7c gespeist werden.

Weiter ist die Steuerung 7 dazu ausgelegt, an den Bildgenerator 6b für die Archivrecherche einen zweiten Satz Pan-Tilt- und Zoomparameter vorzugeben, die an den Bildgenerator 6b über eine Leitung 7b gespeist werden. Der zweite Satz Pan-Tilt- und Zoomparameter ist vom ersten Satz völlig verschieden. Mit dem zweiten Satz Pan-Tilt- und Zoomparameter wird festgelegt, welcher Ausschnitt der abgespeicherten Bilder im Bildstrom 5b ausgegeben werden soll.

Zugleich wird von der Steuerung 7 auch die Ausgabe 4b von Bilddaten aus dem Speicher an den Bildgenerator 6b gesteuert, wobei festgelegt werden kann, beginnend von welchem Index alpha Bilder aus dem Speicher 4 an den Bildgenerator 6b gespeist werden sollen.

Über die Steuerung 7 kann zudem auch festgelegt werden, dass bestimmte Bildbereiche nicht mitgespeichert, sondern weggeschnitten werden sollen. Hierzu kann ein dritter Pan-Tilt- und Zoomparametersatz über eine Leitung 7b an den Bildgenerator 6a gespeist werden. Der dritte Pan-Tilt- und Zoomparametersatz ist unabhängig von den beiden anderen Pan-Tilt- und Zoomparametersätzen.

Die Steuerung 7 umfasst weiter eine Blockbestimmungsstufe (nicht gezeigt), die anhand der Parametersätze die maximal erforderliche Blockgröße bestimmt, die aus dem Bildsensor für die Bildrohdaten ausgelesen werden muss. Diese maximal erforderliche Blockgröße wird an den Bildsensor respektive die diesem zugeordnete Elektronik gespeist, worauf aus dem Bildsensor lediglich jene Bilddaten ausgelesen werden, die im maximal erforderlichen Bildblock liegen. Es sei hier darauf hingewiesen, dass die ausgelesenen Bilddaten geringfügig größer sein können als durch die tatsächlich von den Betrachtern gewünschten Bildausschnitte vorgegeben, da es gegebenenfalls aus technischen Gründen erforderlich ist, eine ganze Reihe oder Zeile an Sensorelementen auszulesen; dies wird nicht als Abweichung vom Konzept der Maximalblockbildung verstanden und nachfolgend nicht weiter separat erwähnt.

Auch sei darauf hingewiesen, dass bestimmte Parameter, beispielsweise die Parameter für die Archivierung, passwortgeschützt sein können und in einem nichtflüchtigen oder batteriegepufferten Bereich abgelegt sein können, damit weder bei einem Stromausfall noch auf andere Weise eine unerwünschte Verstellung auftritt.

Im Gebrauch wird in der Videokamera 1 mit dem Bildsensor 3 ein Bilddatenrohstrom 2 erzeugt und an die Bildgeneratoren 6a und 6c gespeist, die zugleich über die Steuerung 7 und Leitungen 7a und 7c Informationen über die relevanten Bildausschnitte erfahren.

Bildgenerator 6c erzeugt dabei einen Livebilddatenstrom geringer Auflösung und hoher Bildwiederholfrequenz zur Direktüberwachung.

Der unabhängige Bildgenerator 6a erzeugt einen im Speicher 4 abzulegenden Bilddatenstrom mit hoher Auflösung und geringer Bildwiederholfrequenz sowie diesen Bilddatenstrom indizierenden Daten, die im Speicherbereich 4a abgelegt werden.

Der Bildgenerator 6b liegt zunächst still, bis ein Benutzer recherchieren will, ob sich in den im Speicher 4 archivierten Bilddaten ein bestimmtes Ereignis finden lässt.

Dazu gibt der Benutzer am Eingang 8 einen Anfangsparameter alpha für die Recherche, beispielsweise den Aufnahmezeitpunkt des ersten interessierenden Bildes vor. Mit diesem Anfangsparameter alpha wird ein Bild bestimmt, das an den Bildgenerator 6b über Leitung 4b gespeist wird.

Durch Vorgabe eines Pan-Tilt-Zoom-Parametersatzes kann der im Archiv recherchierende Benutzer dann zugleich festlegen, welcher Bildausschnitt an ihn übertragen wird. Dies reduziert die Datenmenge, die zwecks Recherche zu übertragen ist, nicht nur unter jene des Bilddatenrohstroms, sondern auch unter jene der im Speicher abgelegten Bilder.

Sobald der recherchierende Benutzer ein für ihn womöglich relevantes Bild im reduzierten Datenstrom 5b, der ihm über einen schmalbandigeren Datenkanal zugeleitet wird, identifiziert hat, wird er das Bild oder einen dieses enthaltenden Bilddatenstrom mit höherer Auflösung oder vollständiger aus dem Speicher anfordern.

So ist die Recherche ohne Beeinträchtigung eines Livebildstromes und unter Ermöglichung des Zugriffs auf hochaufgelöste Bilder auch bei bandbreitenbegrenzten (Recherche-)Datenkanälen möglich.

Es sei im übrigen erwähnt, dass die hier beschriebenen Bildgeneratorstufen, Maximalblockbestimmungsstufen usw. durch Softwaremodule realisiert sein können, die gemeinsam auf ein und demselben Prozessor oder einer Mehrzahl an Prozessoren abgearbeitet werden können. Es sei weiter erwähnt, dass gegebenenfalls und bevorzugt, ohne dass dies separat erwähnt ist, die Bildgröße ausgegebener Bilder und/oder archivierter Bilder wählbar ist, beispielsweise zwischen Standardformaten wie VGS, SVGA, HD usw.

Weiter sei erwähnt, dass gegebenenfalls mehr als jeweils nur ein Benutzer, der im Bilddatenarchiv sucht, eine Ausgabe von der Kamera erhalten kann. Dazu können mehrere (Recherche-) Bildgeneratoren vorgesehen oder implementiert sein und/oder die Benutzer werden alternierend mit Daten, Bildern oder Bildteilen bedient, was die Ausgabe für den einzelnen recherchierenden Benutzer zwar verlangsamt, aber die Kamerabelastung durch Recherchen und die nachfolgende Ausgabe der Daten begrenzt. Die Erfindung ist also weder in der Offenbarung noch im Schutzumfang darauf beschränkt, dass maximal ein (Recherche-)Generator vorgesehen ist, sondern wird als realisiert angesehen, wenn mindestens eine entsprechende Ausgabestufe etc. vorgesehen ist.

## Patentansprüche

1. Digitale Videokamera (1) mit einem einen Bilddatenrohstrom (2) erzeugenden Bildsensor (3) und einem Speicher (4) zur Speicherung von im Ansprechen auf den Bilddatenrohstrom erzeugter Bilddaten und einer Datenausgabeeinheit, (6)
bei welcher die Datenausgabeeinheit zur Ausgabe von im Ansprechen auf den Bilddatenrohstrom erzeugten Bilddaten (5a) an den Speicher, und zur simultanen Ausgabe von Bilddaten, (5c) und Bilddaten (5b) aus den gespeicherten Daten aus der Kamera an Benutzer ausgebildet ist,
**dadurch gekennzeichnet, dass**
eine Steuerung (7) vorgesehen ist, um im Ansprechen auf sowohl Bildparameter für die Bilddatenstromspeicherung in der Kamera als auch die Bilddatenstromausgabe heraus aus der Kamera einen maximal erforderlichen Bildauschnitt zu bestimmen, der aus dem Sensor oder als Bilddatenrohstrom weiterverarbeitet wird.

2. Digitale Videokamera nach dem vorhergehenden Anspruch, **dadurch gekennzeichnet, dass**
der bildgebende Sensor einen Bilddatenrohstrom mit Bildern hoher Auflösung, insbesondere hoher Pixelzahl und/oder hoher Dynamik erzeugt.

3. Digitale Videokamera nach dem vorhergehenden Anspruch, **dadurch gekennzeichnet, dass** die Datenausgabeeinheit dazu ausgebildet ist, Bilder mit geringerer Auflösung als jene des Bilddatenrohstroms zu erzeugen.

4. Digitale Videokamera nach dem vorhergehenden Anspruch, **dadurch gekennzeichnet, dass** der bildgebende Sensor einen Bilddatenrohstrom mit schneller Bildfolge erzeugt.

5. Digitale Videokamera nach dem vorhergehenden Anspruch, **dadurch gekennzeichnet, dass**
die Datenausgabeeinheit dazu ausgebildet ist,
Bilder
mit einer Bildwiederholfrequenz, die kleiner ist als jene des Bilddatenrohstroms,
und/oder Bilder mit höherem Komprimierungsgrad
und/oder unter Verwendung eines anderen Encodieralgorithmus erzeugte Bilder als Bilddatenstrom mit reduzierter Datenmenge zu erzeugen.

6. Digitale Videokamera nach einem der vorhergehenden Ansprüche, **dadurch gekennzeichnet, dass** die Kamera einen Eingang
zur Vorgabe eines datenreduziert übertragbaren Bilddetails aufweist,
bevorzugt
zur Vorgabe
eines Bildausschnittes und/oder
einer Bildausschnittvergrößerung und/oder ein
es,
bevorzugt durch PTZ-(Pan, Tilt, Zoom-) Parameter bestimmbaren
Bilddetails und/oder
eines Formates und/oder
einer Bildwiederholfrequenz
zur
Vorgabe
eines durch automatische Bildanalyse bestimmten Details,
insbesondere von
automatisch erkannten Gesichtern und/oder
mittels OCR im Bild bestimmter Merkmale, insbesondere von Autokennzeichen.

7. Digitale Videokamera nach einem der vorhergehenden Ansprüche, **dadurch gekennzeichnet, dass**
die Datenausgabeeinheit dazu ausgebildet ist, gespeicherte Bilder anhand des reduzierten Datenstroms identifizierbar zu machen,
wobei
die Videokamera einen Eingang aufweist,
um
Bilder aus dem Speicher identifizierende
Signale zu empfangen
und um im Ansprechen auf
die
empfangenen, Bilder im Speicher identifizierenden
Signale
Bilder
mit erhöhter Auflösung und/ oder weniger stark beschnittene Bilder
und/oder Bilder mit schnellerer Bildfolge, insbesondere als Bildstrom bereitzustellen.

8. Digitale Videokamera nach einem der vorhergehenden Ansprüche, **dadurch gekennzeichnet, dass** die Datenausgabeeinheit dazu ausgebildet ist, einen Bilddatenstrom im Speicher abzulegen und simultan an Benutzer
einen Bilddatenstrom mit reduzierter Datenmenge
und
wenigstens einen
Bilddatenstrom mit einer anderen
räumlichen und/oder
zeitlichen und/oder
dynamischen
Auflösung als jener der im Speicher abgelegten Bilddaten auszugeben.

9. Digitale Videokamera nach einem der vorhergehenden Ansprüche, **dadurch gekennzeichnet, dass**
die Datenausgabeeinheit dazu ausgebildet ist,
als wenigstens einen Bilddatenstrom einen Liv
ebilddatenstrom
hoher Auflösung und
hoher Bildwiederholfrequenz
auszugeben,
bevorzugt
mit höherer Bildwiederholfrequenz als im gespeicherten Datensatz, aber mit bevorzugt geringerer Auflösung.

## Claims

1. Digital video camera (1) comprising an image sensor (3) that generates an image data raw stream (2), and comprising a memory (4) for storing image data generated in response to the image data raw stream, and comprising a data output unit (6),
wherein
the data output unit is designed
for outputting image data (5c)generated in response to the image data raw stream to the memory
and
for simultaneously outputting image data (5c)
and
image data (5b) from the stored data from the camera to users,
**characterized in that**
a controller is provided in order to determine, in response to image parameters for the image data stream storage in the camera and also the image data stream outputting from the camera, a maximum required image segment, which is processed further from the sensor or as an image data raw stream.

2. Digital video camera according to the preceding claim,
**characterized in that**
the imaging sensor generates an image data raw stream comprising images having a high resolution, in particular a high number of pixels and/or a high dynamic range.

3. Digital video camera according to the preceding claim,
**characterized in that**
the data output unit is designed to generate images having a lower resolution than those of the image data raw stream.

4. Digital video camera according to the preceding claim,
**characterized in that**
the imaging sensor generates an image data raw stream comprising a fast image sequence.

5. Digital video camera according to the preceding claim,
**characterized in that**
the data output unit is designed to generate
images having an image refresh frequency that is lower than that of the image data raw stream,
and/or images having a higher degree of compression
and/or images generated using a different encoding algorithm,
as an image data stream having a reduced volume of data.

6. Digital video camera according to any of the preceding claims,
**characterized in that**
the camera has an input
for predetermining an image detail that can be transmitted in a data-reduced fashion,
preferably
for predetermining
an image segment and/or
an image segment magnification and/or an image detail,
which can preferably be determined by PTZ (Pan, Tilt, Zoom) parameters,
and/or
a format and/or
an image refresh frequency,
for predetermining
a detail determined by automatic image analysis,
in particular of
automatically recognized faces, and/or
features determined by means of OCR in the image,
in particular of automobile license plates.

7. Digital video camera according to any of the preceding claims, **characterized in that** the data output unit is designed
to make stored images identifiable on the basis of the reduced data stream,
wherein
the video camera has an input
in order
to receive signals identifying images from the memory,
and in order, in response to
the
received signals, identifying images in the memory,
to provide images
having an increased resolution and/or
less highly cropped images and/or images comprising a faster image sequence,
in particular as an image stream.

8. Digital video camera according to any of the preceding claims, **characterized in that** the data output unit is designed
to store an image data stream in the memory and simultaneously to output to users
an image data stream having a reduced volume of data
and
at least one
image data stream having a different
spatial and/or
temporal and/or
dynamic
resolution than that of the image data stored in the memory.

9. Digital video camera according to any of the preceding claims, **characterized in that** the data output unit is designed to output
as at least one image data stream a
live image data stream
having a high resolution and
a high image refresh frequency, preferably
having a higher image refresh frequency than in the stored data record, but having a preferably lower resolution.

## Revendications

1. Caméra vidéo numérique (1) comprenant un capteur d'images (3) qui génère un flux brut de données d'image (2) et une mémoire (4) destinée à enregistrer les données d'image générées en réaction au flux brut de données d'image et une unité de sortie de données (6), avec laquelle l'unité de sortie de données est configurée pour délivrer à la mémoire les données d'image (5a) générées en réaction au flux brut de données d'image et pour délivrer simultanément de la caméra à l'utilisateur des données d'image (5c) et des données d'image (5b) à partir des données enregistrées, **caractérisée en ce**
**qu'**il existe une commande (7) pour, en réaction à la fois à des paramètres d'image pour l'enregistrement du flux de données d'image dans la caméra et à la délivrance du flux de données d'image depuis la caméra, définir une portion d'image maximale nécessaire qui, issue du capteur ou en tant que flux brut de données d'image, fera l'objet d'un traitement supplémentaire.

2. Caméra vidéo numérique selon la revendication précédente, **caractérisée en ce que** le capteur producteur d'images génère un flux brut de données d'image avec des images à haute résolution, notamment à grand nombre de pixels et/ou à forte dynamique.

3. Caméra vidéo numérique selon la revendication précédente, **caractérisée en ce que** l'unité de sortie de données est configurée pour générer des images ayant une résolution plus faible que celles du flux brut de données d'image.

4. Caméra vidéo numérique selon la revendication précédente, **caractérisée en ce que** le capteur producteur d'images génère un flux brut de données d'image avec une séquence d'images rapide.

5. Caméra vidéo numérique selon la revendication précédente, **caractérisée en ce que** l'unité de sortie de données est configurée pour générer des images ayant une fréquence de répétition d'image inférieure à celle du flux brut de données d'image et/ou des images ayant un taux de compression plus élevé et/ou des images générées en utilisant un algorithme de codage différent sous la forme d'un flux de données d'image avec un volume de données réduit.

6. Caméra vidéo numérique selon l'une des revendications précédentes, **caractérisée en ce que** la caméra possède une entrée destinée à prédéfinir un détail d'image qui peut être transmis avec des données réduites, de préférence destinée à prédéfinir une portion d'image et/ou un grossissement de portion d'image et/ou un détail d'image pouvant de préférence être défini par des paramètres PTZ (Pan, Tilt, Zoom) et/ou un format et/ou une fréquence de répétition d'image, destinée à prédéfinir un détail défini par une analyse d'image automatique, notamment de visages reconnus automatiquement et/ou de caractéristiques déterminées par OCR dans l'image, notamment de plaques d'immatriculation.

7. Caméra vidéo numérique selon l'une des revendications précédentes, **caractérisée en ce que** l'unité de sortie de données est configurée pour rendre les images enregistrées identifiables à l'aide du flux de données réduit, la caméra vidéo possédant une entrée pour recevoir des signaux identifiant les images dans la mémoire et, en réaction aux signaux identifiant les images dans la mémoire, fournir des images ayant une résolution accrue et/ou des images moins fortement réduites et/ou des images avec une séquence d'images plus rapide, notamment sous la forme d'un flux d'images.

8. Caméra vidéo numérique selon l'une des revendications précédentes, **caractérisée en ce que** l'unité de sortie de données est configurée pour stocker un flux de données d'image dans la mémoire et délivrer simultanément à l'utilisateur un flux de données d'image avec un volume de données réduit et au moins un flux de données d'image ayant une résolution dans l'espace et/ou dans le temps et/ou dynamique différente de celle des données d'image stockées dans la mémoire.

9. Caméra vidéo numérique selon l'une des revendications précédentes, **caractérisée en ce que** l'unité de sortie de données est configurée pour délivrer, comme au moins un flux de données d'image, un flux de données d'image en direct à haute résolution et à haute fréquence de répétition d'image, de préférence avec une fréquence de répétition d'image plus élevée que dans le jeu de données enregistré, mais de préférence avec une résolution plus faible.
